# EUROPÄISCHE PATENTSCHRIFT

(11) **EP 2 249 217 B1**
(45) Veröffentlichungstag und Bekanntmachung des Hinweises auf die Patenterteilung: **24.04.2013**
(21) Anmeldenummer: 09159775.7
(22) Anmeldetag: 08.05.2009
(51) Int. Cl.: G05B 19/00

(54) **Automatisierungsgerät und Automatisierungssystem**
Automation device and automation system
Appareil d'automatisation et système d'automatisation

(43) Veröffentlichungstag der Anmeldung: 10.11.2010
(73) Patentinhaber: Siemens Aktiengesellschaft, 80333 München (DE)
(72) Erfinder: Biedermann, Andreas, 09125, Chemnitz (DE); Weissbach,Dr. Bernhard, 09669, Frankenberg (DE)

(56) Entgegenhaltungen:
- WO-A-00/19286
- WO-A-2006/136201
- DE-A1- 10 309 168
- DE-B3-102004 007 233

## Beschreibung

### Beschreibung

### Automatisierungsgerät und Automatisierungssystem

Die Erfindung betrifft ein Automatisierungsgerät umfassend eine erste Funktionseinheit, eine zweite Funktionseinheit, einen ersten Netzanschluss zum Anschluss an ein erstes Datennetzwerk und eine Busmastereinheit zum Anschluss einer Peripheriekomponente.

Es sind Automatisierungsgeräte bekannt, die eine On-Board- oder auch modular steckbare Peripherie aufweisen. Unter Peripherie sind dabei beispielsweise Ein-/Ausgabebaugruppen oder zusätzliche Sensorbaugruppen zu verstehen. Ein-/Ausgabesignale der Peripherie werden von dem Automatisierungsgerät selbst verarbeitet oder an eine übergeordnete Recheneinheit weitergeleitet bzw. verschaltet. Vorzugsweise ist diese Verschaltung mittels eines ersten Datennetzwerkes realisiert. Das erste Datennetzwerk wird auch als Primärbussystem bezeichnet. Insbesondere in der Automatisierungstechnik gibt es aber auch Anwendungsfälle, bei denen nur ein Teil der Peripherie im Automatisierungsgerät selbst verarbeitet werden soll bzw. vorverarbeitet werden soll. Der andere Teil der Peripherie soll der übergeordneten Recheneinheit, auch Hostsystem genannt, zugeteilt werden. An dem Primärbussystem kann ein Primärbus-Device zur Anschaltung von zusätzlicher Peripherie an die übergeordnete Recheneinheit angeschaltet sein.

Die WO 00/19286 offenbart eine übergeordnete Steuerung welche als Busmaster über einen Feldbus mit einem Automatisierungsgerät kommuniziert. Dieses besitzt eine eigene Verabeitungsfunktionalität für schnelle Reaktionszeiten mit daran angeschlossenen Peripheriekomponenten. Außerdem liefert das Automatisierungsgerät der übergeordneten Steuerung auch Eingabe-, Ausgabefunktionalität.

Bekannt sind Automatisierungsgeräte, die für Profibus eine Slave-Anbindung über virtuelle Module realisiert haben. Diese Slave-Anbindung ist im Wesentlichen auf die Nutzdaten beschränkt. Ein Anwender, welcher das Automatisierungsgerät für eine bestimmte industrielle Anwendung parametrieren möchte, muss dazu zwei separate Projektierungen erstellen, eine für den Slave an einem Hostsystem und eine für das eigentliche Automatisierungsgerät. Zusätzlich müssen eine Kopplung zwischen der Peripherie und der übergeordneten Recheneinheit projektiert werden. Auch die Zugriffe auf die Peripherie von einem Anwenderprogramm müssen ausprogrammiert werden und die Daten von oder auf virtuelle Module kopiert werden. Nachteilig hieran ist, dass eine Reaktionszeit der Peripherie, welche durch die übergeordnete Recheneinheit gesteuert wird, dementsprechend hoch ist.

Es ist Aufgabe der vorliegenden Erfindung die Verarbeitungsgeschwindigkeit bzw. die Reaktionszeit eines derartigen Automatisierungsgerätes zu verbessern.

Die Aufgabe wird für das eingangs genannte Automatisierungsgerät dadurch gelöst, dass die erste Funktionseinheit eine erste Schnittstelleneinheit aufweist, welcher eine erste Netzadresse zugeordnet ist, und die zweite Funktionseinheit eine zweite Schnittstelleneinheit aufweist, welcher eine zweite Netzadresse zugeordnet ist, wobei mittels eines Aufteilungsmittels ein Adressraum der Peripheriekomponente logisch aufteilbar ist und ein erster Adressraum als ein abgetrennter Teil des Adressraumes einer über den ersten Netzanschluss anschließbaren übergeordneten Recheneinheit direkt zuordenbar ist. Es ist somit ein multifunktionales Automatisierungsgerät realisiert, dieses kann sowohl eine Verarbeitungsleistung für einen Teil einer eigenen zentralen Peripherie erbringen als auch einen Teil dieser zentralen Peripherie transparent einem übergeordneten Host-System als eine "schnelle" dezentrale Peripherie zur Verfügung stellen. Eine Sicht der übergeordneten Recheneinheit (Host-System) auf die Peripherie, welche nun für die übergeordnete Recheneinheit transparent erscheint, entspricht einer Sicht auf eine dezentrale Peripherie an einem Primärbus-Device. Die Primärbus-Device-Funktionalität soll dabei die gleichen Eigenschaften besitzen, die ein Standard-Device ohne Vorverarbeitung bietet. Um diesen Ansprüchen zu genügen, werden die Funktionseinheiten weitestgehend voneinander entkoppelt. Dazu werden zwei unabhängige Schnittstelleneinheiten mit eigenen Netzadressen vorgesehen. Die Netzadressen sind dabei vorzugsweise als IP-Adressen vorgesehen. Mittels der zwei unterschiedlichen Netzadressen sind die zwei Funktionseinheiten bezüglich einer Projektierung und ihrer Hardware voneinander entkoppelt. Eine Device-Funktionalität solch eines Gerätes muss somit nicht mehr von einem Steuerungssystem, welches vorrangig Steuerungsaufgaben übernehmen soll und somit eine hohe Performance aufweisen soll, übernommen werden. Ein Steuerungssystem wird nun nicht mehr durch zusätzliche Koordinationsaufgaben für Peripheriekomponenten beeinträchtigt. Das Automatisierungsgerät weist dabei mit seinen beiden Funktionseinheiten zwei eigenständige Funktionen auf. Das Automatisierungsgerät ist mittels der zwei Funktionseinheiten in zwei logische Geräte unterteilt, für jede Schnittstelleneinheit existiert eine eigene IP-Adresse, die auch in dem ersten Datennetzwerk sichtbar ist. Diese beiden logischen Geräte werden zu einem multifunktionalen Automatisierungsgerät zusammengefasst.

In einer weiterführenden Ausgestaltung weist die erste Schnittstelleneinheit einen ersten Netzwerkschalter auf, an welchen eine erste Datenleitung angeschlossen ist, welche die erste Funktionseinheit mit der zweiten Funktionseinheit koppelt. Als Netzwerkschalter wird vorzugsweise ein Switch eingesetzt, welcher eine Ankopplung über den ersten Netzwerkanschluss an das erste Datennetzwerk ermöglicht und dabei zeitgleich eine Kommunikationskopplung über die erste Datenleitung zur zweiten Funktionseinheit realisiert. Ein Zugriffsweg von einer übergeordneten Recheneinheit über die erste Funktionseinheit in die zweite Funktionseinheit ist mit der datentechnischen Kopplung über die beiden Switche realisiert.

Als eine besonders vorteilhafte Alternative ist die erste Funktionseinheit als ein Steuerungssystem und die zweite Funktionseinheit als eine Kommunikationseinheit zur Nutzdatenanbindung ausgestaltet.

Bei einer alternativen Ausgestaltungsvariante ist es umgekehrt, dabei ist die zweite Funktionseinheit als ein Steuerungssystem und die erste Funktionseinheit als eine Kommunikationseinheit zur Nutzdatenanbindung ausgestaltet. Als Steuerungssystem ist dabei vorzugsweise eine speicherprogrammierbare Steuerung in einem Automatisierungsgerät zu verstehen. Die speicherprogrammierbare Steuerung dient der Ablaufsteuerung eines industriellen Prozesses. Die Kommunikationseinheit zur Nutzdatenanbindung ist dabei vorzugsweise als ein DP-Slave ausgestaltet. Solch ein DP-Slave ermöglicht die datentechnische Anbindung von dezentralen Peripheriekomponenten (DP). Diese dezentralen Peripheriekomponenten können beispielsweise Ein-/Ausgabemodule zum Entgegennehmen und Ausgeben von Ein- und Ausgangssignalen sein, wie sie in einem industriellen Prozess für Aktoren und Sensoren benötigt werden.

Weiterhin ist es vorteilhaft, wenn die Funktionseinheit, welche als Steuerungssystem ausgestaltet ist, die Busmastereinheit aufweist. Die Busmastereinheit dient dem Anschluss von Peripheriekomponenten, dabei können Peripheriekomponenten sowohl zentral an einem Automatisierungsgerät gesteckte Ein-/Ausgabebaugruppen sein oder auch dezentral im industriellen Fertigungsprozess verteilte Peripheriekomponenten sein, welche dann vorzugsweise über einen Feldbus an den Busmaster angeschaltet sind.

In einem Speicherinterface können Daten und/oder Ein-/Ausgabe-Werte zwischengespeichert werden. Dieses Speicherinterface dient als Schnittstelle zwischen den beiden Funktionseinheiten. Bei der Ausgestaltung einer Zweiprozessorarchitektur kann ein Prozessor der ersten Funktionseinheit über eine Koppelleitung über einen weiteren Prozessor der zweiten Funktionseinheit auf dessen Speicherinterface zum Datenaustausch zugreifen.

In einer optionalen Ausgestaltung weist die Funktionseinheit, welche als Kommunikationseinheit ausgestaltet ist, einen zweiten Netzwerkschalter auf, welcher mit einer zweiten Datenleitung verbunden ist, wobei die zweite Datenleitung zum zusätzlichen Anschluss eines Datennetzwerkes nach außen geführt ist. Es kann somit eine Direktverbindung der jeweiligen Funktionseinheit mit der Außenwelt realisiert werden ohne über die andere Funktionseinheit zu kommunizieren.

In der praktischen Anwendung hat sich herausgestellt, dass die Zusammenfassung der Funktionseinheit zu einer baulichen Einheit mit einem Gehäuse für den Einbau in einem industriellen Prozess die Installationsarbeit erleichtert.

Bei einem Automatisierungssystem mit einer Recheneinheit und einem Automatisierungsgerät nach einem der Ansprüche 1 bis 8, wobei über ein erstes Datennetzwerk die Recheneinheit mit dem Automatisierungsgerät verbunden ist, wobei ein zweites Datennetzwerk des Automatisierungsgerätes mit weiteren Peripheriekomponenten oder Automatisierungskomponenten verbindet, ist das Aufteilungsmittel derart ausgestaltet, die Peripheriekomponenten logisch aufzuteilen und einen ersten Zugriffsweg von der Recheneinheit auf den ersten Adressraum und einen zweiten Zugriffsweg von dem Automatisierungsgerät auf den zweiten Adressraum zu ermöglichen.

Weitere Merkmale und Vorteile der Erfindung werden anhand der Zeichnung näher erläutert. Es zeigen:
- FIG 1: ein Prinzipbild eines Automatisierungssystem mit einem Automatisierungsgerät,
- FIG 2: ein erstes Ausführungsbeispiel des Automatisie- rungsgeräts nach einer Architektur 1 und
- FIG 3: ein zweites Ausführungsbeispiel des Automatisie- rungsgerätes nach einer Architektur 2.

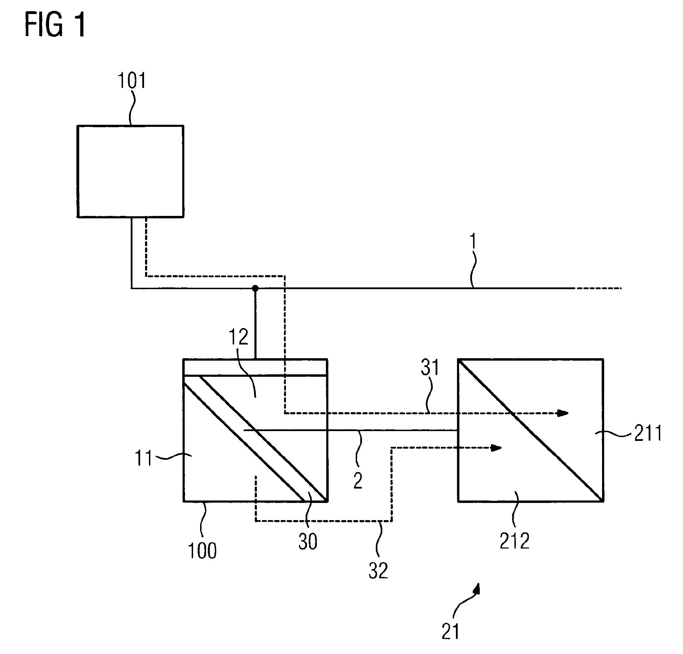

Gemäß FIG 1 ist ein Automatisierungssystem mit einer Recheneinheit 101, einem Automatisierungsgerät 100 und einer ersten Peripheriekomponente 21 dargestellt. Die Recheneinheit 101, welche als ein übergeordnetes Host-System oder auch als ein übergeordneter Host-Rechner angesehen werden kann, ist über ein Datennetzwerk 1 mit dem Automatisierungsgerät 100 zum Austausch von Daten gekoppelt. Das Automatisierungsgerät 100 umfasst eine erste Funktionseinheit 11 und eine zweite Funktionseinheit 12. Die Funktionseinheiten 11, 12 repräsentieren in dem Automatisierungsgerät 100 zwei eigenständige logische Geräte, nämlich ein Steuerungssystem, wie eine speicherprogrammierbare Steuerung, und eine Kommunikationseinheit, wie eine Automatisierungskomponente zur Anschaltung einer dezentralen Peripherie. Das Automatisierungsgerät ist dabei als eine bauliche Einheit ausgestaltet, wobei ein Gehäuse die erste Funktionseinheit 11 und die zweite Funktionseinheit 12 aufnimmt.

Wird das Automatisierungsgerät 100 aus Sicht des ersten Datennetzwerkes 1 (Primärnetzwerk) von der Recheneinheit 101 betrachtet, so stellt sich in der betrachteten Netztopologie das Automatisierungsgerät 100 der Recheneinheit 101 als zwei logische Geräte dar. Dies wird dadurch erreicht, dass jede Funktionseinheit eine eigenständige Netzadresse (IP-Adresse) zugeteilt ist. Auch ein an das erste Datennetzwerk angeschlossene Engineeringsystem mit einer Projektierungssoftware für das Automatisierungsgerät 100 sieht zwei logische Geräte, welche mit dem Enineeringsystem separat zu projektieren sind.

Die erste Funktionseinheit weist dabei eine erste Netzwerkadresse IP 1 und die zweite Funktionseinheit eine zweite Netzwerkadresse IP 2 auf. Mittels eines im Automatisierungsgerät 100 angeordnetem Aufteilungsmittel 30 wird ein Adressraum einer Peripheriekomponente 21 logisch aufteilbar. Die erste Peripheriekomponente 21 ist durch eine diagonale symbolisch in einen ersten Adressraum 211 und einen zweiten Adressraum 212 aufgeteilt. Über ein zweites Datennetzwerk 2 steht die erste Peripheriekomponente 21 mit dem Automatisierungsgerät 100 in Verbindung. Über diese Datenverbindung können Nutzdaten ausgetauscht werden.

Die logische Aufteilung in einen ersten Adressraum 211 und einen zweiten Adressraum 212, wobei sich die Adressräume 211, 212 disjunkt zueinander verhalten, ermöglicht der Recheneinheit 101 über einen ersten Zugriffsweg 31 eine direkte Ankopplung an den ersten Adressraum 211. Der Adressraum 211 wird dabei beispielsweise durch eine Reihe von digitalen Eingängen einer Ein-/Ausgabebaugruppe aufgespannt.

Der zweite Adressraum 212 wird in diesem Falle durch dieselbe digitale Ein-/Ausgabebaugruppe aufgespannt, wobei der Anteil der disjunkten Menge dieses Mal nur die Digitalausgänge betrifft. Das Automatisierungsgerät 100 kann somit mit seiner ersten Funktionseinheit 11 über einen zweiten Zugriffsweg 32 die digitalen Ausgänge der Ein-/Ausgabebaugruppe aus dem Adressraum 212 direkt abfragen.

Mit Hilfe des Automatisierungsgerätes 100 kann somit auf vorteilhafte Art und Weise ein Teilbereich einer Peripherie direkt einer übergeordneten Recheneinheit 101 zur Verfügung gestellt werden ohne das Automatisierungsgerät weiterhin mit Kommunikationsmanagementaufgaben zu belasten.

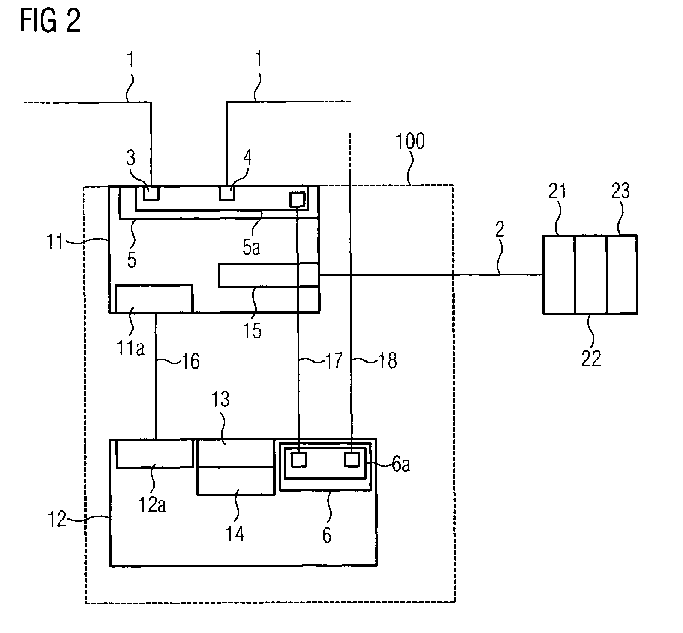

Gemäß FIG 2 ist das Automatisierungsgerät 100 in einer Architektur 1 nach einer ersten Ausgestaltungsvariante detaillierter dargestellt. Das Automatisierungsgerät 100 dargestellt durch eine gestrichelte Linie repräsentiert eine bauliche Einheit mit einem Gehäuse, innerhalb dieses Gehäuses ist die erste Funktionseinheit 11 und die zweite Funktionseinheit 12 angeordnet. Die zweite Funktionseinheit 12 ist dabei als eine Kommunikationseinheit zur Nutzdatenanbindung ausgestaltet. Die erste Funktionseinheit 11 verfügt über einen ersten Netzanschluss 3 und einen zweiten Netzanschluss 4. Über die Netzanschlüsse 3, 4 liegt die erste Funktionseinheit 11 als eine Steuerungseinheit in Linie des ersten Datennetzwerkes 1. Das erste Datennetzwerk 1 kann auch als ein Primärbus angesehen werden. Die zweite Funktionseinheit 12 ist über einen in der ersten Schnittstelleneinheit 5 integrierten ersten Switch 5a an die Steuerungseinheit angeschlossen und hat somit auch eine Verbindung zum ersten Datennetzwerk 1. Die Verbindung von dem ersten Switch 5a zu der zweiten Funktionseinheit 12 wird mittels einer ersten Datenleitung 17 realisiert.

Die erste Funktionseinheit 11 weist einen ersten Prozessor 11a auf, welcher über eine Koppelleitung 16 mit einem zweiten Prozessor 12a der zweiten Funktionseinheit 12 gekoppelt ist. Mittels der Koppelleitung 16 kann der erste Prozessor 11a mit dem zweiten Prozessor 12a Daten austauschen, wobei die Daten auch aus dem Speicherinterface 13 stammen können. Bei dieser sogenannten Zweiprozessorarchitektur ist das Speicherinterface eine Schnittstelle mit Pufferfunktionalität zwischen den beiden Prozessoren 11a, 12a. Zur Anschaltung einer ersten Peripheriekomponente 21, einer zweiten Peripheriekomponente 22 und einer dritten Peripheriekomponente 23 über ein zweites Datennetzwerk 2 an die erste Funktionseinheit 11 weist dieses einen Busmaster 15 auf. Damit über das erste Datennetzwerk 1 für das Automatisierungsgerät 100 als zwei logische Geräte erkannt werden kann, ist in der ersten Schnittstelleneinheit 5 eine erste Netzwerkadresse implementiert und in der zweiten Schnittstelleneinheit 6 eine zweite Netzwerkadresse implementiert. Eine an das erste Datennetzwerk 1 angeschlossene übergeordnete Recheneinheit 101 (Figur 1) kann somit über das erste Datennetzwerk 1 die erste Schnittstelleneinheit 5 mit einer ersten IP-Adresse IP 1 und über die Verbindung mit der ersten Datenleitung 17 der ersten Schnittstelleneinheit 5 mit der zweiten Schnittstelleneinheit 6 auch die in der zweiten Schnittstelleneinheit 6 implementierte zweite Netzwerkadresse IP 2 erkennen.

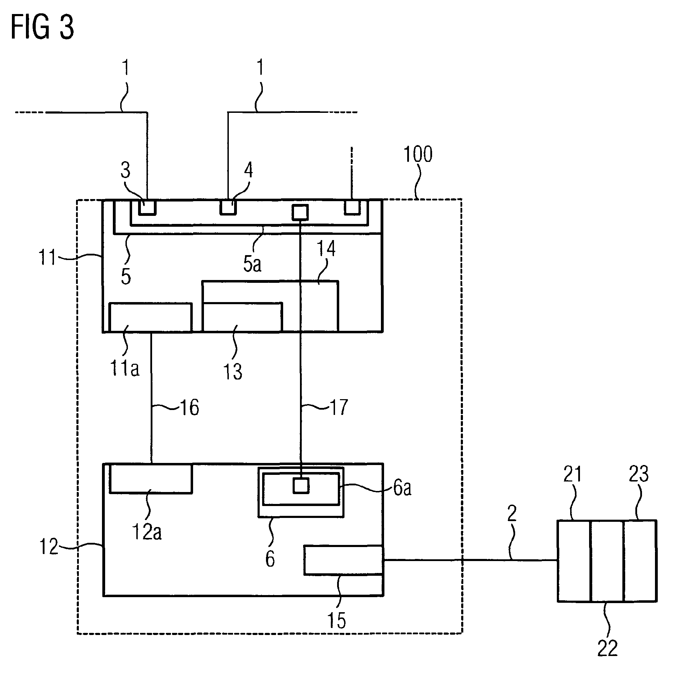

Gemäß FIG 3 ist ein zweites Ausführungsbeispiel in einer Architektur 2 dargestellt. Das Automatisierungsgerät 100 weist nun wiederum eine erste Funktionseinheit 11 und eine zweite Funktionseinheit 12 auf. In diesem Fall ist allerdings die erste Funktionseinheit 11 als eine Kommunikationseinheit und die zweite Funktionseinheit 12 als eine Steuerungseinheit ausgestaltet. Anders gesagt, kann das Automatisierungsgerät 100 nun als eine Steuerungs-CPU mit einer Devicefunktionalität für eine dezentrale Peripherie betrachtet werden. Dabei liegt das Device schaltungstechnisch vor der CPU. Die CPU ist über einen in den Device integrierten Switch angekoppelt. Diese Ankopplung wird in der Funktionseinheit 11 mittels der ersten Schnittstelleneinheit 5, in der ein erster Switch 5a integriert ist, realisiert. Dazu ist in einem ersten Switch 5a eine Verbindung mittels einer ersten Datenleitung 17 zu der zweiten Schnittstelleneinheit 6 realisiert. In der zweiten Schnittstelleneinheit 6 ist wiederum ein zweiter Switch 6a integriert. Dieser zweite Switch 6a könnte beispielsweise auch zweifach ausgelegt sein und über eine zweite Datenleitung 18, welche zum zusätzlichen Anschluss eines Datennetzwerkes nach außen geführt ist, eine weitere Anschaltoption an den zweiten Switch 6a ermöglichen.

Die erste Funktionseinheit 11 weist auch in diesem Beispiel einen ersten Prozessor 11a und die zweite Funktionseinheit 12 weist einen zweiten Prozessor 12a auf, welche über eine Koppelleitung 16 miteinander verbunden sind. Die erste Funktionseinheit 11 als Kommunikationseinheit weist ein Speicherinterface 13 mit einem RAM-Baustein 14 auf.

Zur Anschaltung der Peripheriekomponenten 21, 22, 23 ist in der zweiten Funktionseinheit 12 ein Busmaster 15 integriert. Der Busmaster 15 ist über ein zweites Datennetzwerk 2 an die Peripherieeinheiten 21, 22, 23 angeschlossen. Das zweite Datennetzwerk 2 kann beispielsweise als ein Feldbus, vorzugsweise als ein Profibus ausgelegt sein. Es wäre aber auch ebenso denkbar, das das zweite Datennetzwerk 2 ein integrierter Kommunikationsbus auf dem Automatisierungsgerät ist, zu welchem modular Ein-/Ausgabebaugruppen zur Erweiterung einer dezentralen Peripherie hinzugesteckt werden können.

Durch die Realisierung der Funktionseinheiten 11, 12 mit jeweils einer eigenen Netzwerkadresse (IP-Adresse) kann jeder Funktionseinheit 11, 12 ihre spezifische Funktionalität bezogen auf die Sicht von der übergeordneten Recheneinheit 101 zugeordnet werden. Beide Geräte, nämlich Steuerungseinheit und Kommunikationseinheit teilen sich nun über das zweite Datennetzwerk 2, welches als ein Sekundärbus bezeichnet werden kann, eine angeschlossene zentrale Peripherie. Die eigentlichen Peripherieressourcen, wie sie durch die erste bis dritte Peripheriekomponente 21, 22, 23 repräsentiert werden, sind nur einmal als Peripherieressource vorhanden. Eine disjunkte Aufteilung dieser Peripherieressourcen wird durch die Vergabe zweier unterschiedlicher IP-Adressen über eine entsprechende Projektierung mit einem an das Automatisierungsgerät 100 angeschlossenen Projektierungstool, wie ein Engineeringsystem, realisiert. Anstelle der Verbindung zwischen der Steuerungseinheit und den Peripheriekomponenten 21, 22, 23 ist auch eine Weiterleitung des Primärbusses zur Peripherie, die wiederum auch aus einer oder mehreren Funktionseinheiten bestehen kann, möglich.

Das Aufteilungsmittel 30 ist beispielsweise ein freiprogrammierbarer Baustein, wie ein ASIC oder ein weiterer Prozessor. Das Aufteilungsmittel 30 wird über das Projektierungstool mit einer Firmware belegt, wobei in dieser Firmware die Aufteilungsinformationen für die Peripherie hinterlegt ist.

## Patentansprüche

1. Automatisierungsgerät (100) umfassend
- eine erste Funktionseinheit (11),
- eine zweite Funktionseinheit (12),
- einen ersten Netzanschluss (3) zum Anschluss an ein erstes Datennetzwerk (1),
- eine Busmastereinheit (15) zum Anschluss einer Peripheriekomponente (21, 22, 23),
- **dadurch gekennzeichnet, dass** die erste Funktionseinheit (11) eine erste Schnittstelleneinheit (5) aufweist, welcher eine erste Netzadresse zugeordnet ist,
- und die zweite Funktionseinheit (12) eine zweite Schnittstelleneinheit (6) aufweist, welcher eine zweite Netzadresse zugeordnet ist, wobei die erste und die zweite Netzadresse in dem ersten Datennetzwerk (1) sichtbar ist, und wodurch die Funktionalität der Funktionseinheiten (11,12) auf die Sicht einer übergeordneten Recheneinheit (101) zugeordnet ist,
wobei mittels eines im Automatisierungsgerät (100) angeordneten Aufteilungsmittels (30) ein Adressraum der Peripheriekomponente (21) logisch aufteilbar ist und ein erster Adressraum (211) als ein abgetrennter Teil des Adressraumes der über den ersten Netzanschluss (3) anschließbaren übergeordneten Recheneinheit (101) direkt zuordenbar ist, wobei die logische Aufteilung in den ersten Adressraum (211) und einen zweiten Adressraum (212) als Aufteilungsinformation in dem Aufteilungsmittel (30) hinterlegt ist, wodurch der Recheneinheit (101) über einen ersten Zugriffsweg (31) eine direkte Ankopplung an den ersten Adressraum (211), und dem Automatisierungssystem (100) über einen zweiten Zugriffsweg (32) eine direkte Abfrage aus dem zweiten Adressraum (212) ermöglicht wird, wodurch ein Teilbereich einer Peripherie direkt der übergeordneten Recheneinheit (101) zur Verfügung gestellt wird.

2. Automatisierungsgerät (100) nach Anspruch 1, wobei die erste Schnittstelleneinheit (5) einen ersten Netzwerkschalter (5a) aufweist, an welchen eine erste Datenleitung (17) angeschlossen ist, welche die erste Funktionseinheit (11) mit der zweiten Funktionseinheit (12) koppelt.

3. Automatisierungsgerät (100) nach Anspruch 1 oder 2, wobei die erste Funktionseinheit (11) als ein Steuerungssystem und die zweite Funktionseinheit (12) als eine Kommunikationseinheit zur Nutzdatenanbindung ausgestaltet ist.

4. Automatisierungsgerät (100) nach Anspruch 1 oder 2, wobei die zweite Funktionseinheit (12) als ein Steuerungssystem und die erste Funktionseinheit (11) als eine Kommunikationseinheit zur Nutzdatenanbindung ausgestaltet ist.

5. Automatisierungsgerät (100) nach Anspruch 3 oder 4, wobei die Funktionseinheit (11, 12), welche als Steuerungssystem ausgestaltet ist, die Busmastereinheit (15) aufweist.

6. Automatisierungsgerät (100) nach Anspruch 3 oder 4, wobei die Funktionseinheit (11, 12), welche als Kommunikationseinheit ausgestaltet ist, ein Speicherinterface (13) aufweist.

7. Automatisierungsgerät (100) nach Anspruch 5 oder 6 , wobei die Funktionseinheit (11, 12), welche als Kommunikationseinheit ausgestaltet ist, einen zweiten Netzwerkschalter (6a) aufweist, welcher mit einer zweiten Datenleitung (18) verbunden ist, wobei die zweite Datenleitung (18) zum zusätzlichen Anschluss eines Datennetzwerkes nach außen geführt ist.

8. Automatisierungsgerät (100) nach einem der Ansprüche 1 bis 7 ausgestaltet als eine bauliche Einheit mit Gehäuse.

9. Automatisierungssystem mit einer Recheneinheit (101) und einem Automatisierungsgerät (100) nach einem der vorangegangenen Ansprüche, welche über ein erstes Datennetzwerk (1) verbunden sind, wobei ein zweites Datennetzwerk (2) das Automatisierungsgerät (100) mit weiteren Peripheriekomponenten (21, 22, 23) oder Automatisierungskomponenten verbindet, wobei das Aufteilungsmittel (30) ausgestaltet ist, die Peripheriekomponenten logisch aufzuteilen und einen ersten Zugriffsweg (31) von der Recheneinheit (101) auf den ersten Adressraum (211) und einen zweiten Zugriffsweg (32) von dem Automatisierungsgerät (100) auf den zweiten Adressraum (212) zu ermöglichen.

## Claims

1. Automation device (100) comprising
- a first functional unit (11),
- a second functional unit (12),
- a first network connection (3) for connection to a first data network (1),
- a bus master unit (15) for connecting a peripheral component (21, 22, 23),
- **characterized in that** the first functional unit (11) has a first interface unit (5) which is assigned a first network address,
- and the second functional unit (12) has a second interface unit (6) which is assigned a second network address, the first and second network addresses being visible in the first data network (1), as a result of which the functionality of the functional units (11, 12) is assigned on the basis of the view from a superordinate computation unit (101),
a partitioning means (30) arranged in the automation device (100) being able to be used to logically partition an address space of the peripheral component (21), and a first address space (211) being able to be directly assigned, as a partitioned part of the address space, to the superordinate computation unit (101) which can be connected via the first network connection (3), the logical partitioning into the first address space (211) and a second address space (212) being stored as partitioning information in the partitioning means (30), as a result of which the computation unit (101) is allowed to be directly coupled to the first address space (211) via a first access path (31) and the automation system (100) is allowed to directly query the second address space (212) via a second access path (32), as a result of which the superordinate computation unit (101) is directly provided with a section of the peripherals.

2. Automation device (100) according to Claim 1, the first interface unit (5) having a first network switch (5a) to which a first data line (17) is connected, which data line couples the first functional unit (11) to the second functional unit (12).

3. Automation device (100) according to Claim 1 or 2, the first functional unit (11) being in the form of a control system and the second functional unit (12) being in the form of a communication unit for useful data connection.

4. Automation device (100) according to Claim 1 or 2, the second functional unit (12) being in the form of a control system and the first functional unit (11) being in the form of a communication unit for useful data connection.

5. Automation device (100) according to Claim 3 or 4, the functional unit (11, 12) which is in the form of a control system having the bus master unit (15).

6. Automation device (100) according to Claim 3 or 4, the functional unit (11, 12) which is in the form of a communication unit having a memory interface (13).

7. Automation device (100) according to Claim 5 or 6, the functional unit (11, 12) which is in the form of a communication unit having a second network switch (6a) which is connected to a second data line (18), the second data line (18) being routed to the outside in order to additionally connect a data network.

8. Automation device (100) according to one of Claims 1 to 7 in the form of a structural unit with a housing.

9. Automation system having a computation unit (101) and an automation device (100) according to one of the preceding claims, which are connected via a first data network (1), a second data network (2) connecting the automation device (100) to further peripheral components (21, 22, 23) or automation components, the partitioning means (30) being designed to logically partition the peripheral components and to enable a first access path (31) from the computation unit (101) to the first address space (211) and a second access path (32) from the automation device (100) to the second address space (212).

## Revendications

1. Appareil ( 100 ) d'automatisation comprenant
- une première unité ( 11 ) fonctionnelle,
- une deuxième unité ( 12 ) fonctionnelle,
- une première connexion ( 3 ) de réseau pour la connexion à un premier réseau ( 1 ) de données,
- une unité ( 15 ) maître de bus pour la connexion d'un composant ( 21, 22, 23 ) périphérique,
- **caractérisé en ce que** la première unité ( 11 ) fonctionnelle a une première unité ( 5 ) d'interface, à laquelle est associée une première adresse de réseau,
- et la deuxième unité ( 12 ) fonctionnelle a une deuxième unité ( 6 ) d'interface, à laquelle est associée une deuxième adresse de réseau, la première et la deuxième adresses de réseau étant visibles dans le premier réseau ( 1 ) de données et par cela la fonctionnalité des unités ( 11, 12 ) fonctionnelles est associée à la vue d'une unité ( 100 ) informatique supérieure hiérarchiquement,
dans lequel à l'aide d'un moyen ( 30 ) de répartition disposé dans l'appareil ( 100 ) d'automatisation, un espace d'adresse du composant ( 21 ) périphérique peut être réparti logiquement et un premier espace ( 211 ) d'adresse peut être associé directement en tant que partie séparée de l'espace d'adresse à l'unité ( 101 ) informatique supérieure hiérarchiquement et pouvant être raccordée par la première connexion ( 3 ) de réseau, la répartition logique dans le premier espace ( 211 ) d'adresse et dans un deuxième espace ( 212 ) d'adresse étant mémorisée comme information de répartition dans des moyens ( 30 ) de répartition de sorte que l'unité ( 101 ) informatique rend possible, par un premier chemin ( 31 ) d'accès, un couplage direct au premier espace ( 211 ) d'adresse et au système ( 100 ) d'automatisation et, par un deuxième chemin ( 32 ) d'accès, une demande directe à partir du deuxième espace ( 212 ) d'adresse de sorte qu'une région partielle d'une périphérie est mise à disposition directement de l'unité ( 101 ) informatique supérieure hiérarchiquement.

2. Appareil ( 100 ) d'automatisation suivant la revendication 1,
dans lequel la première unité ( 5 ) d'interface a un premier commutateur ( 5a ) de réseau, auquel est raccordée une première ligne ( 17 ) de données, qui couple la première unité ( 11 ) fonctionnelle à la deuxième unité ( 12 ) fonctionnelle.

3. Appareil ( 100 ) d'automatisation suivant la revendication 1 ou 2,
dans lequel la première unité ( 11 ) fonctionnelle est constituée en système de commande et la deuxième unité ( 12 ) fonctionnelle en unité de communication pour l'injection de données utiles.

4. Appareil ( 100 ) d'automatisation suivant la revendication 1 ou 2,
dans lequel la deuxième unité ( 12 ) fonctionnelle est constituée en système de commande et la première unité ( 11 ) fonctionnelle en unité de communication pour l'injection de donnée utile.

5. Appareil ( 100 ) d'automatisation suivant la revendication 3 ou 4,
dans lequel l'unité ( 11, 12 ) fonctionnelle qui est conformée en système de commande comporte l'unité ( 15 ) maître de bus.

6. Appareil ( 100 ) d'automatisation suivant la revendication 3 ou 4,
dans lequel l'unité ( 11, 12 ) fonctionnelle qui est conformée en unité de communication comporte une interface ( 13 ) de mémoire.

7. Appareil ( 100 ) d'automatisation suivant la revendication 5 ou 6,
dans lequel l'unité ( 11, 12 ) fonctionnelle qui est conformée en unité de communication a un deuxième commutateur ( 6a ) de réseau, qui est relié à une deuxième ligne ( 18 ) de données,
la deuxième ligne ( 18 ) de données allant vers l'extérieur pour la connexion supplémentaire d'un réseau de données.

8. Appareil ( 100 ) d'automatisation suivant l'une des revendications 1 à 7 conformée en unité de construction ayant un boîtier.

9. Système d'automatisation comprenant une unité ( 101 ) informatique et un appareil ( 100 ) d'automatisation suivant l'une des revendications précédentes, qui sont reliées par un premier réseau ( 1 ) de données, un deuxième réseau ( 2 ) de données reliant l'appareil ( 100 ) d'automatisation à d'autres composants ( 21, 22, 23 ) périphériques ou à d'autres composants d'automatisation, le moyen ( 30 ) de répartition étant tel qu'il répartit logiquement les composants périphériques et rend possibles un premier chemin ( 31 ) d'accès de l'unité ( 101 ) informatique au premier espace ( 211 ) d'adresse et un deuxième chemin ( 32 ) d'accès de l'appareil ( 100 ) d'automatisation au deuxième espace ( 212 ) d'adresse.
